**Europäisches Patentamt**

**European Patent Office**

**Office européen des brevets**

(19)

(11) Numéro de publication: **0 246 123**
**B1**

(12) # FASCICULE DE BREVET EUROPEEN

(45) Date de publication du fascicule du brevet:
**04.10.89**

(51) Int. Cl.⁴: **C03B 27/04**

(21) Numéro de dépôt: **87400841.0**

(22) Date de dépôt: **14.04.87**

(54) **Dispositif pour la trempe de feuilles de verre.**

(30) Priorité: **16.04.86 DE 3612720**

(43) Date de publication de la demande:
**19.11.87 Bulletin 87/47**

(45) Mention de la délivrance du brevet:
**04.10.89 Bulletin 89/40**

(84) Etats contractants désignés:
**BE CH DE ES FR GB IT LI SE**

(56) Documents cités:
**DE-C- 808 880**
**FR-A- 1 150 913**
**GB-A- 1 212 208**
**US-A- 4 444 579**

(73) Titulaire: **SAINT-GOBAIN VITRAGE, "Les Miroirs" 18, avenue d'Alsace, F-92400 Courbevoie(FR)**

(84) Etats contractants désignés: **BE CH ES FR GB IT LI SE**

(73) Titulaire: **VEGLA Vereinigte Glaswerke GmbH, Viktoriaallee 3-5, D-5100 Aachen(DE)**

(84) Etats contractants désignés: **DE**

(72) Inventeur: **Kuster, Hans Werner, Schervierstrasse 20, D-5100 Aachen (R.F.A.)(DE)**
Inventeur: **Radermacher, Herbert, Belven 118, B-Raeren(BE)**
Inventeur: **Vanaschen, Luc, Binsterweg 113, B-4700 Eupen(BE)**

(74) Mandataire: **Leconte, Jean-Gérard et al, Saint-Gobain Recherche 39, Quai Lucien Lefranc, F-93304 Aubervilliers Cedex(FR)**

EP 0 246 123 B1

ACTORUM AG

## Description

La présente invention concerne un dispositif pour la trempe thermique de feuilles de verre, comportant deux caissons de soufflage opposés l'un à l'autre et pourvus chacun d'un grand nombre d'ajutages de soufflage.

Des dispositifs de trempe de ce type sont principalement utilisés pour la fabrication de vitrages en verre de sécurité trempé pour véhicules automobiles. Ils sont connus en diverses formes d'éxécution. Ainsi, par exemple, un caisson de soufflage connu est constitué d'un caisson répartiteur d'air dont la plaque antérieure est pourvue d'un grand nombre d'orifices de sortie d'air. Un exemple pour la construction d'un tel caisson de soufflage est décrit dans le document de brevet DE-OS 1 471 820. Pour obtenir de meilleures conditions pour l'écoulement nécessaire de l'air après son impact sur la feuille de verre chaude, de tels caissons de soufflage constitués d'un caisson répartiteur d'air et d'une plaque antérieure pourvue d'orifices de sortie d'air sont cependant souvent pourvus, sur la plaque antérieure, d'ajutages tubulaires entre lesquels l'air chaud peut d'écouler latéralement. Le document DE-AS 2 408 084 (ou son équivalent FR-A-2219912) illustre, par exemple, un tel caisson de soufflage.

D'autres caissons de soufflage encore sont pourvus de buses plates en forme de lames d'étendant transversalement sur les caissons de soufflage, avec des orifices de soufflage d'air ménagés dans les buses en forme de lames, et l'échappement de l'air chaud s'effectuant par les espaces prévus entre les buses plates. Des caissons de soufflage de ce type sont, par exemple, décrits dans les documents de brevet DE-AS 2 333 924 (ou son équivalent FR-A-2196297) et DE-OS 3 425 809.

Il est aussi connu d'adapter la surface de sortie d'air for mée par les orifices de sortie d'air ou par les orifices des ajutages tubulaires au profil des feuilles de verre lorsque les feuilles de verre à tremper sont des feuilles bombées. On s'efforce ainsi de faire en sorte que les orifices de sortie soient situés partout à la même distance de la surface du verre pour qu'une trempe uniforme soit obtenue sur toute la surface de la feuille de verre.

Il est en outre connu, pour des raisons économiques, de tremper des feuilles de verre à l'aide de caissons de soufflage correspondant à leur grandeur. Etant donné cependant que l'adaptation d'un dispositif de trempe par échange des caissons de soufflage constitue une opération fastidieuse, on utilise dans la pratique, en règle générale, des caissons de soufflage de surface étendue qui sont aménagés pour les plus grandes feuilles de verre que l'on peut rencontrer. On se résigne dans ce cas au fait que, lors de la trempe de feuilles de verre de plus petit format, une fraction de l'air de soufflage n'est pas utilisée, voir p. er. le document de brevet DE-OS 1 471 820 ayant servi de barepons le préambule de la revendication 1.

L'invention a pour but de réaliser des caissons de soufflage du type spécifié, d'une manière telle que, d'une part, ils soient aménagés pour la trempe de feuilles de verre de grande superficie mais que, d'autre part, ils fonctionnent avec un haut degré d'efficacité même dans le cas de la trempe de feuilles de verre plus petites.

Suivant l'invention, ce but est réalisé par le fait que, dans le cas de caissons de soufflage garnis d'ajutages ou orifices de soufflage dont le champ est aménagé pour des feuilles de verre relativement grandes, l'alimentation en air de certains ajutages ou orifices ou groupes d'ajutages ou orifices de soufflage peut être coupée à la demande, au moins dans les zones périphériques du caisson de soufflage en fonction de la forme et da la grandeur des feuilles de verre à tremper.

Lors de la mise en oeuvre de l'invention, pour laquelle divers exemples de réalisation sont donnés ci-après, il est possible non seulement d'optimiser le processus de trempe lui-même, en améliorant le refroidissement et les conditions d'écoulement pour de petites feuilles de verre, mais aussi de réaliser de dette manière des économies considérables. En effet, compte tenu du fait que, dans une installation de trempe industrielle, le processus de refroidissement constitue la partie qui consomme le plus d'énergie, il est évident que l'invention permet de réduire sensiblement la consommation en air de soufflage et ainsi d'abaisser considérablement les frais.

Suivant une première forme d'éxécution de l'invention, les caissons de soufflage sont agencés d'une manière telle que les orifices ou ajutages souhaités, situés dans la zone périphérique du caisson de soufflage, puissent avoir leur alimentation en air coupée par des registres échangeables formant caches, dont la surface évidée correspond à la forme et à la surface des feuilles de verre à tremper.

Dans le cas d'une autre forme d'exécution, dans laquelle le soufflage est réalisé par des buses plates en forme de lames séparées les unes des autres, les buses en forme de lames sont équipées sur leurs extrémités latérales, d'ouvertures pour insérer des barreaux d'étanchéité qui, en fonction de leur profondeur d'insertion, obturent le nombre souhaité d'orifices de sortie d'air dans chaque buse.

Il est aussi possible de piloter chaque ajutage ou orifice individuellement, de l'ouvrir et de le fermer à la demande en fonction de la forme et de la grandeur de la feuille de verre à tremper, étant entendu que, dans ce cas, chaque ajutage ou orifice est raccordé par l'intermédiaire d'un canal à un caisson répartiteur d'air et que, dans chaque canal est installée une valve pouvant être actionnée séparément des autres. Suivant un développement de cette forme d'exécution, il est même possible, en fonction de la forme et de la grandeur de chaque feuille de verre de modifier automatiquement la grandeur de la surface de soufflage, en prévoyant, par exemple, un programme de commande au moyen duquel lesdites valves sont actionnées automatiquement.

Divers exemples de réalisation de caissons de soufflage conformes à l'invention seront décrits ci-après, plus en détail, avec référence aux dessins annexés qui représentent :

Figure 1 : une vue arrière, en perspective, d'un caisson de soufflage garni d'ajutages tubulaires, équipé d'un registre formant cache pour masquer les ajutages inutiles,

Figure 2 : une vue en coupe verticale (plan II-II) du caisson de soufflage représenté sur la figure 1,

Figure 3 : une vue d'un registre d'arrêt formant cache qui permet une réduction de la pression de soufflage dans la zone périphérique de la feuille de verre,

Figure 4 : une vue en perspective d'un caisson de soufflage formé de buses plates en forme de lames, équipé d'un registre d'arrêt formant cache pour les ajutages ou orifices inutiles,

Figure 5 : une vue en coupe suivant le plan V-V du caisson de soufflage représenté sur la figure 4,

Figure 6 : un caisson de soufflage pourvu de buses plates en forme de lames, équipé de barreaux d'étanchéité indépendants, aptes à boucher certains des orifices des différentes buses,

Figure 7 : une vue en coupe longitudinale suivant le plan VII-VII de la figure 6,

Figure 8 : la structure d'un barreau d'étanchéité utilisé pour un caisson de soufflage équipé de buses plates en forme de lames.

Figure 9 : une vue d'un caisson de soufflage, dans lequel chaque ajutage ou orifice de soufflage est pourvu d'une valve d'arrêt.

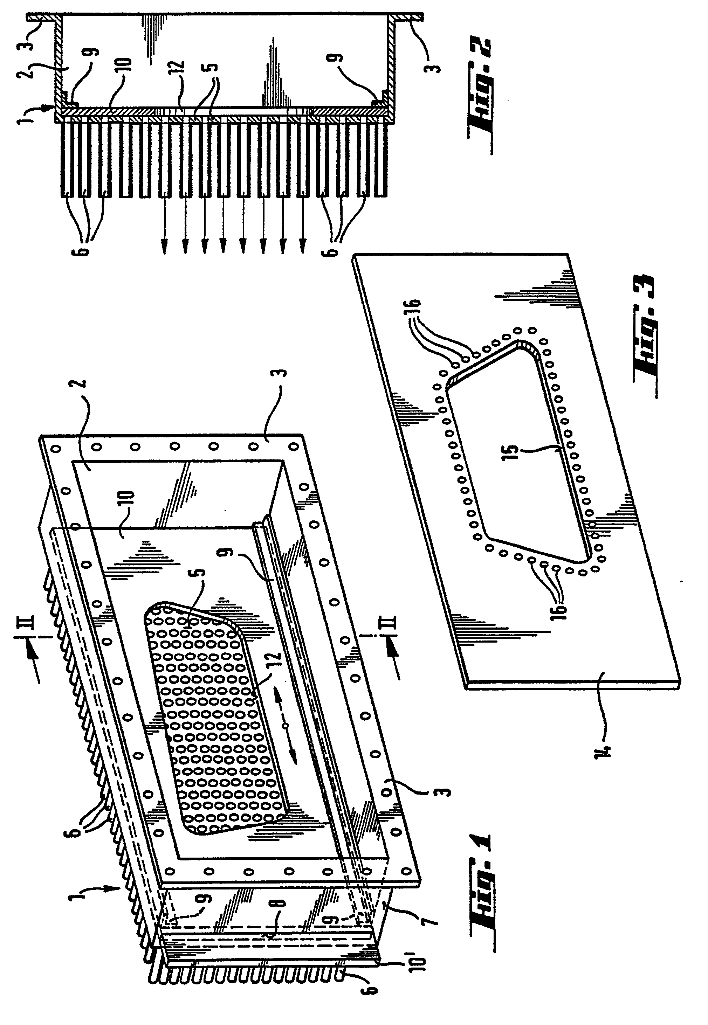

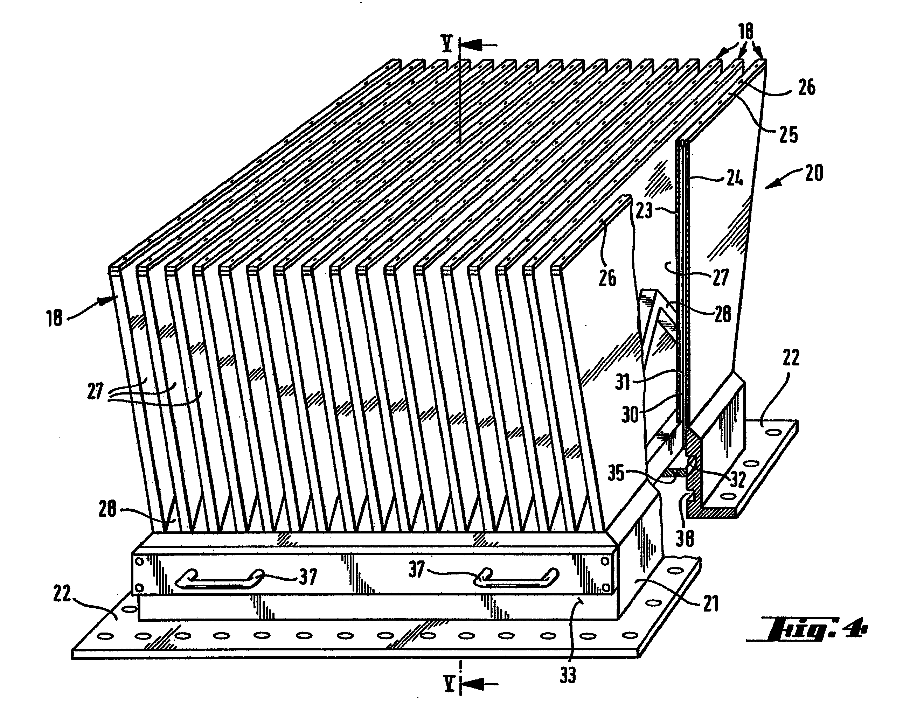

Le caisson de soufflage 1 représenté sur les figures 1 et 2 comporte un caisson répartiteur d'air 2 de grande section dont le côté ouvert est relié par boulonnage, par l'intermédiaire d'une bride 3, à un caisson ou un bâti correspondant qui est raccordé pour sa part, par l'intermédiaire de conduites appropriées, au ventilateur fournissant l'air de soufflage. Le caisson répartiteur d'air 2 est fermé au niveau de sa face avant par une plaque antérieure 5 dans laquelle sont montés de nombreux petits ajutages tubulaires 6 faisant saillie vers l'extérieur. Les petits ajutages tubulaires 6 sont ainsi alimentés au moyen d'air de soufflage par l'intermédiaire du caisson répartiteur d'air 2.

Une fente 8, qui s'étend sur toute la largeur du caisson de soufflage, est prévue immédiatement devant la plaque antérieure 5 dans la paroi latérale 7 du caisson répartiteur d'air 2 et à l'intérieur de ce caisson 2 sont disposées des glissières 9 qui s'étendent parallèlement à la plaque antérieure 5 à une courte distance de celle-ci. La fente 8 et les glissières 9 forment, à côté de la plaque antérieure 5, un passage destiné à recevoir un registre d'arrêt 10 en forme de plaque. Le registre d'arrêt 10 dépasse latéralement de la fente 8 dans une mesure telle qu'il puisse être saisi par sa partie dépassante 10', être retiré et, en cas de besoin, être échangé contre un autre registre d'arrêt.

Le registre d'arrêt 10 est formé d'une plaque métallique et présente une découpe 12 correspondant, quant à sa forme et à sa grandeur, aux feuilles de verre qui doivent être trempées au moyen de ce caisson de soufflage. Le registre d'arrêt 10 isole les petits ajutages tubulaires 6 se trouvant dans la zone périphérique de la plaque antérieure 5 de l'alimentation d'air et ne laisse libres que les ajutages de soufflage qui se trouvent à l'intérieur de la découpe 12. En conséquence, seuls sont alimentés en air de soufflage les ajutages tubulaires 6 qui sont directement opposés à la feuille de verre à tremper, tandis que les ajutages tubulaires 6 qui sont disposés en dehors de cette zone sont isolés et ont leur alimentation en air coupée.

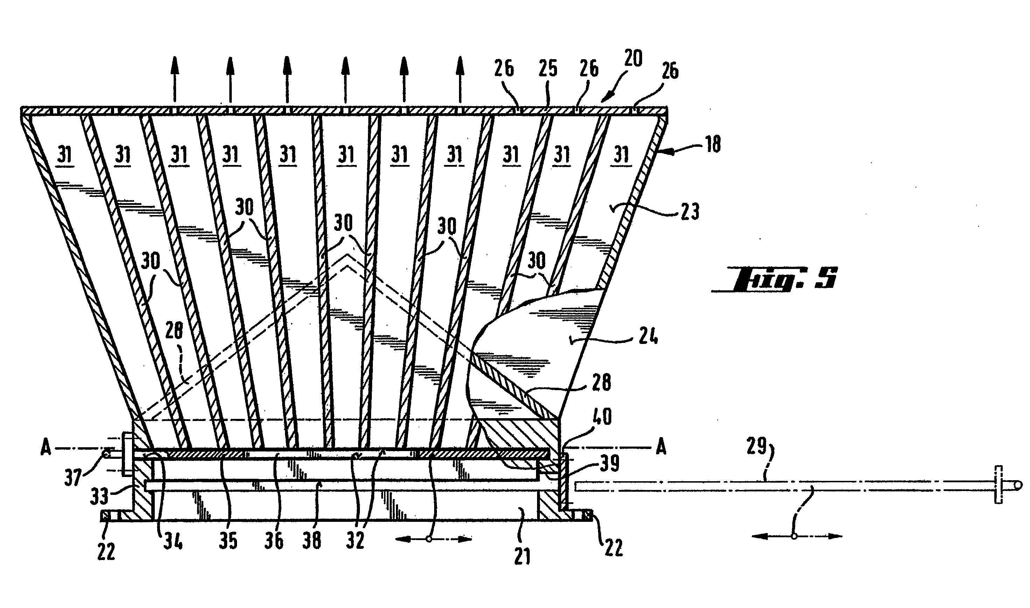

La figure 3 illustre un registre d'arrêt 14 avec une découpe 15 formant cache qui correspond à une autre forme de feuille de verre. Dans le cas de ce registre d'arrêt 14, la découpe 15 est plus petite que la feuille de verre pour laquelle ce registre d'arrêt est utilisé et tout autour de la découpe 15 la plaque métallique présente un cordon de perforations, incisions, évidements 16. Le volume de l'air de soufflage dans la zone périphérique de la feuille de verre peut de cette façon être réduit dans une mesure souhaitée au cas où cela s'avérerait avantageux. Une telle réduction de l'effet de refroidissement dans la zone périphérique des feuilles de verre est en règle générale avantageuse parce que, dans le cas d'une soufflage uniforme, la zone périphérique de la feuille de verre à tremper est soumise à des contraintes de compression plus élevées que dans la zone centrale de la feuille de verre, plus élevées que ce qui est désiré, en raison du fait que l'évacuation de chaleur est accrue sur le bord de la feuille de verre entrainant aussi un phénomène de "tension de peau de tambour". Avec un registre d'arrêt 14 correspondant à celui de la figure 3, cet effet de trempe périphérique accrue peut être compensé d'une manière simple dans une large mesure.

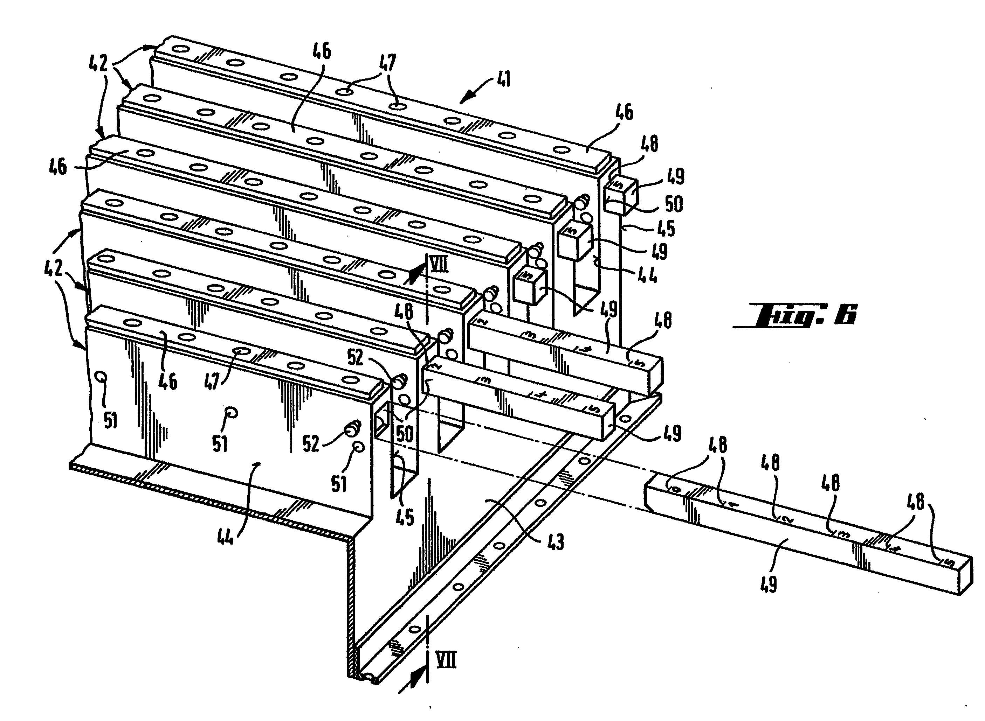

La figure 4 est une vue en élévation de côté d'un caisson de soufflage 20 pourvu de buses plates en forme de lames 18, dans lequel les buses en forme de lames 18 débouchent dans un caisson répartiteur d'air 21 pourvu d'une bride annulaire 22 au moyen de laquelle le caisson de soufflage 20 est raccordé à une bride annulaire correspondante non représentée, appartenant à l'extrémité du système d'alimentation d'air, également non représenté. Chaque buse plate 18 est formée par des parois latérales 23, 24 en tôle. A sa partie supérieure, chaque buse plate 18 est fermée par une bande 25 dans laquelle des perforations 26, qui forment les orifices de soufflage, sont ménagées aux distances souhaitées. L'air de soufflage, dirigé sur une feuille de verre à tremper portée à haute température, chauffé par impact sur ladite feuille de verre chaude s'écoule par les espaces 27 entre les buses 18. Dans le bas des espaces 27 du caisson de soufflage inférieur d'un dispositif de trempe disposé horizontalement, sont prévus des intercalaires 28 en forme de toit. En cas de bris de la feuille de verre, les fragments de verre qui tombent entre les buses 18, sont évacués vers l'extérieur du dispositif sur les faces obliques formées par ces intercalaires. Il en résulte que les espaces 27 ne sont pas obstrués par ces fragments de verre, et que l'écoulement sans entrave de l'air dans ces espaces reste garanti.

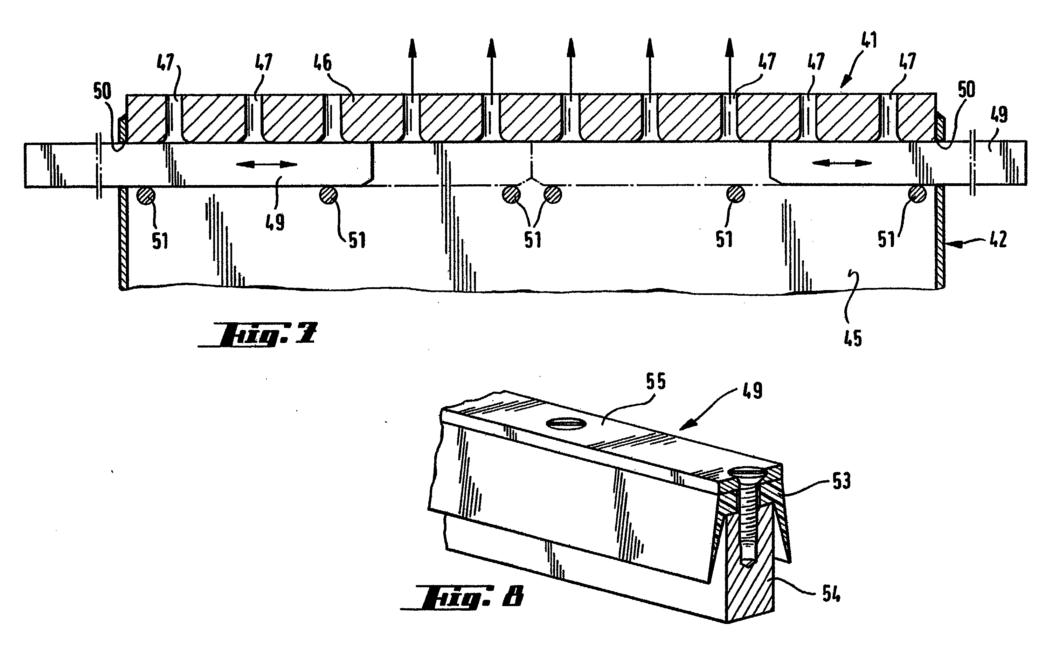

Chaque buse 18 est, comme la figure 5 le montre clairement, subdivisée par des cloisons 30 en des canaux individuels 31, d'une manière telle que chaque orifice 26 soit alimenté au moyen d'air de soufflage par un canal 31 qui lui soit propre. Tous les canaux 31 de l'ensemble des buses 18 du caisson de soufflage 20 prennent naissance dans un plan A-A, les orifices d'alimentation des canaux 31 formant un réseau semblable au réseau formé par les ajutages ou orifices de soufflage 26.

En dessous du plan A-A des orifices d'alimentation des canaux 31 et à l'intérieur du caisson répartiteur d'air 31 est prévu un passage 32 et, dans une paroi latérale 33 du caisson 21, est prévue une fente 34 qui s'étend sur toute la largeur dudit caisson 21. Un registre d'arrêt 35 formant cache est inséré à l'intérieur de la fente 34 et glissé dans le passage 32. Ce registre d'arrêt 35 présente dans sa surface une découpe 36 qui correspond à la forme et à la grandeur de la feuille de verre à tremper, de sorte qu'à nouveau seuls sont alimentés en air les canaux 31 et les orifices 26 qui correspondent à la découpe 36, tandis que les autres canaux 31 et leurs orifices 26 sont isolés du caisson répartiteur d'air 21. A l'aide de poignées adéquates 37, le registre d'arrêt 35 peut, en cas de besoin, être retiré comme un tiroir et échangé contre un autre registre d'arrêt.

Etant donné que d'une part, lors d'une opération de soufflage, une partie des orifices 26 n'est pas alimentée en air et que, d'autre part, il peut arriver qu'une feuille de verre se brise en de petits fragments, il n'est pas impossible que dans le caisson de soufflage inférieur d'un dispositif de trempe horizontal, de menus fragments de verre tombent par les orifices ou ajutages 26 et les canaux 31 sur le registre d'arrêt 35. Lors du retrait de ce registre d'arrêt 35, ces menus fragments de verre seraient retenus par les cloisons 30 et tomberaient dans le caisson répartiteur d'air et ainsi dans le système de conduites et pourraient susciter des difficultés lors de l'enclenchement de l'alimentation d'air de soufflage. Pour éviter ce risque, un autre passage 38 est prévu en dessous du premier passage 32 à l'intérieur du caisson répartiteur 21 et peut recevoir, par une fente 39, une tôle 29 collectrice des menus fragments de verre, cette tôle 29 étant mise en place avant que le registre d'arrêt 35 ne soit retiré, de sorte que les menus fragments de verre sont recueillis par cette tôle 29. La tôle collectrice 29, chargée des menus fragments de verre, est ensuite retirée par la fente 39 qui est d'une hauteur prévue suffisante pour ce faire. La fente 39 est ensuite refermée par une bande d'étanchéité 40.

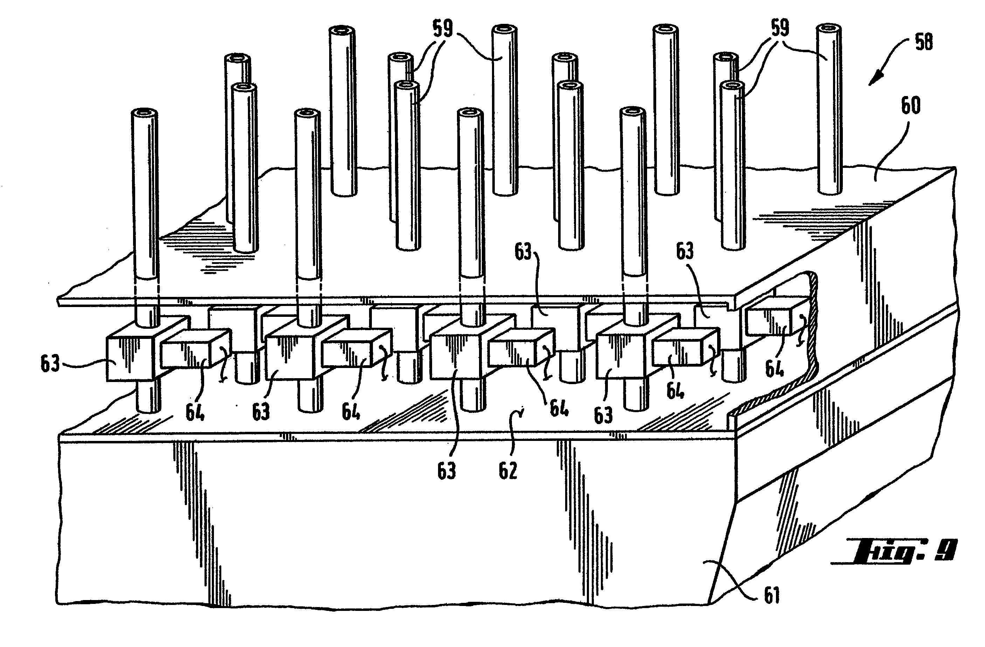

Une autre possibilité de réalisation de l'invention, dans le cas d'un caisson de soufflage avec des buses plates en formes de lames, est illustré sur les figures 6 à 8. Dans ce cas, chaque buse plate 42 d'un caisson de soufflage 41 n'est pas subdivisée intérieurement par des cloisons, mais s'ouvre par la totalité de sa longuer dans le caisson répartiteur d'air 43. Comme déjà expliqué en liaison avec les autres figures, chaque buse 42 est formée de parois latérales 44, 45 et d'une bande de fermeture supérieure 46, dans laquelle des perforations 47 formant les orifices de soufflage sont ménagées. Les orifices de soufflage 47, qui ne sont pas utilisés pour la trempe d'une feuille de verre donnée, sont dans ce cas isolés de l'alimentation en air de soufflage par des barreaux d'étanchéité 49, ces barreaux 49 étant introduits par les deux extrémités latérales de chaque buse 42, chacun par une ouverture correspondante 50 dans la buse, jusqu'à une profondeur correspondant aux orifices extérieurs 47 qui doivent être fermés. Alors que les barreaux d'étanchéité 49 s'appliquent de manière étanche par leur face supérieure directement contre la face inférieure plane de la bande de fermeture 46, ils prennent appui par leur face inférieure sur des boulons 51 qui sont fixés dans les parois latérales 44, 45 de la buse. Pour faciliter le réglage de la position d'enfoncement de ces barreaux d'étanchéité 49, un marquage gradué 48 coopérant avec le bord de l'ouverture 50 peut être prévu, par exemple, sur la face supérieure du barreau d'étanchéité 49, pour indiquer ainsi la longueur de la partie masquée de la buse 42 en question. De plus, des vis de blocage 52 peuvent être prévues pour fixer les barreaux d'étanchéité 49 en place.

Ce dispositif permet ainsi de réduire à volonté le champ des orifices ou ajutages alimentés en air et de l'adapter à n'importe quelle forme et grandeur de feuilles de verre.

Lorsqu'une étanchéité particulièrement bonne des orifices de soufflage doit être obtenue, on peut munir les barreaux d'étanchéité 49 d'une moulure d'étanchéité supplémentaire 53, telle que représentée sur la figure 8. Cette moulure d'étanchéité 53, qui est faite d'une matière déformable du type caoutchouc ou élastomère, de section transversale en U, est fixée sur un profilé métallique 54, lui-même fixé sur le barreau d'étanchéité 49, de telle façon que les deux ailes latérales de la moulure 53 soient orientées à l'encontre du flux d'air et s'appliquent, sous l'effet de la pression de l'air, comme des lèvres d'étanchéité contre les parois latérales de la buse. La fixation de la moulure d'étanchéité 53 s'effectue par l'intermédiaire d'une latte 55, posée extérieurement sur l'âme médiane de la moulure, vissée à travers cette âme médiane de la moulure d'étanchéité 53 sur le profilé métallique 54 qui est, par exemple, en métal, afin d'assurer ainsi une protection mécanique supplémentaire de la moulure d'étanchéité 53 contre d'éventuels petits éclats de verre tombés dans les orifices 47. La fixation, au lieu d'être réalisée au moyen de vis, peut aussi être réalisée par collage et dans ce cas, d'une part, l'âme médiane de la moulure d'étanchéité 53 est collée au profilé métallique 54 et, d'autre part la latte 55 est collée à l'âme médiane de la moulure d'étanchéité 53.

Une autre forme d'éxécution d'un caisson de soufflage 58 conforme à l'invention est représentée sur la figure 9. Cette forme d'exécution se distingue par le fait que chaque petit tube de soufflage 59, ou au moins les petits tubes de soufflage qui sont disposés dans les zones périphériques de la plaque antérieure 60 du caisson, peuvent être isolés individuellement et indépendamment les uns des autres, de l'alimentation en air de soufflage. A cet effet, les petits tubes de soufflage 59, qui débouchent dans le caisson répartiteur d'air 61 et qui y sont maintenus dans sa paroi 62, sont chacun pourvus d'une valve 63, par exemple actionnée électriquement par l'intermédiaire d'une commande programmée adéquate. On peut de cette façon commander rapidement l'ouverture de chaque orifice ou de groupes d'orifices de soufflage. Aussi, l'adaptation à une autre grandeur de feuille de verre peut s'effectuer pratiquement instantanément. Un tel caisson de soufflage 58 convient donc en particulier dans une chaine de fabrication automatique dans laquelle de petites séries de feuilles de verre, chaque fois différentes, sont trempées ou dans laquelle même les feuilles de verre individuelles qui se succèdent ont des formes et des grandeurs différentes. Dans le cas d'une telle chaine de fabrication, dans laquelle les autres paramètres du procédé, comme le chauffage du four, la vitesse de transport, etc..., sont aussi commandés par un système de commande central en fonction de la grandeur et de la forme des feuilles de verre, le caisson de soufflage 58 décrit peut être adapté de manière optimale par l'unité de commande centrale en fonction de chaque feuille de verre.

Au cas où deux ou plus de deux petites feuilles de verre sont trempées simultanément à l'aide d'un grand caisson de soufflage, il est avantageux, à l'aide de moyens conformes à l'invention, de n'alimenter en air de soufflage à chaque fois que des zones de soufflage correspondant au format de ces feuilles de verre. Ceci peut être effectué avec toutes les formes d'éxécution décrites. Dans ce cas, les zones individuelles peuvent être entièrement séparées les unes des autres. Ainsi par exemple, lors de l'utilisation d'un registre d'arrêt étendu, il est possible de prévoir deux ou plus de deux découpes séparées l'une de l'au tre, qui sont adaptées à la position des feuilles de verre individuelles dans le dispositif de soufflage, ainsi qu'à leur forme et à leur grandeur. D'une manière correspondante, les autres formes d'éxécution permettent aussi d'atteindre le même résultat chaque fois avec les moyens respectivement décrits.

Le dispositif décrit est un dispositif de trempe horizontale, mais bien entendu un système équivalent destiné à réduire la surface du champ de buses - ajutages ou orifices de soufflage - peut équiper un dispositif de trempe vertical.

**Revendications**

1. Dispositif pour la trempe thermique de feuilles de verre comportant deux caissons de soufflage opposés l'un à l'autre et pourvus chacun d'un grand nombre d'ajutages ou orifices de soufflage, caractérisé en ce que dans le cas de caissons de soufflage (1, 20, 41, 58), dont le champ des ajutages est aménagé pour tremper des feuilles de verre relativement grandes, l'alimentation en air de certains ajutages ou orifices ou groupes d'ajutages ou orifices de soufflage peut être coupée au moins dans les zones périphériques du champ d'ajutages de soufflage, en fonction de la forme et de la grandeur des feuilles de verre à tremper.

2. Dispositif suivant la revendication 1, caractérisé en ce que le caisson de soufflage (1) est formé d'un caisson répartiteur d'air (2) et d'un grand nombre d'ajutages tubulaires (6) flichés dans la plaque antérieure (5) du caisson répartiteur (2), et en ce que immédiatement avant la plaque antérieure (5), est ménagé un passage muni de glissières (9) et ouvrant par une fente (8) dans une paroi latérale (7) du caisson répartiteur, ce passage étant destiné à recevoir un registre d'arrêt (10) échangeable qui présente une découpe (12) correspondant à la forme et à la grandeur de la feuille de verre à tremper.

3. Dispositif suivant la revendication 1, caractérisé en ce que le caisson de soufflage (20) comprend un caisson répartiteur d'air (21) et une série de buses en forme de lames (18) espacées les unes des autres et s'étendant sur toute la largeur du caisson répartiteur d'air (21), et en ce qu'à l'intérieur des buses en forme de lames (18), sont prévues des cloisons (30), qui délimitent des canaux d'alimentation en air (31), ces canaux prenant tous naissance dans un plan devant lequel est prévu, à l'intérieur du caisson répartiteur d'air (21), un passage (32) pour recevoir un registre d'arrêt (35), échangeable de l'extérieur, qui présente une découpe (36) correspondant à la forme et à la grandeur de la feuille de verre à tremper.

4. Dispositif suivant la revendication 3, caractérisé en ce que le caisson de soufflage inférieur (20) d'un dispositif de trempe orienté horizontalement est pourvu, en dessous du passage (32), d'un autre passage (38) dans lequel, avant l'échange de registre d'arrêt (35), une tôle collectrice (29) peut être insérée pour recueillir de petits éclats de verre éventuellement tombés dans les orifices (26) non alimentés en air et se trouvant sur le registre d'arrêt (35).

5. Dispositif suivant l'une des revendications 2, 3 ou 4, ca ractérisé en ce que le registre d'arrêt échangeable (14) est pourvu, tout autour de la découpe (15) correspondant à la forme de la feuille de verre à tremper, de perforations (16) ou d'autres incisions ou évidements qui assurent aux ajutages ou orifices de soufflage agissant sur la zone périphérique de la feuille de verre une alimentation en air réduite.

6. Dispositif suivant la revendication 1, caractérisé en ce que le caisson de soufflage (41) comprend un caisson répartiteur d' air (43) et une série de buses en forme de lames (42) espacées les unes des autres et s'étendant sur toute la largeur du caisson répartiteur d'air (43), et que les buses (42) sont pourvues, dans leur extrémité latérale, d'ouvertures (50) dans lesquelles des barreaux d'étanchéité (49) peuvent être insérés latéralement pour isoler les orifices de soufflage (47) de l'alimentation d'air.

7. Dispositif suivant la revendication 6, caractérisé en ce que les barreaux d'étanchéité (49) sont pourvus de moulures d'étanchéité (53) en matière déformable du type caoutchouc, élastomère.

8. Dispositif suivant la revendication 1, caractérisé en ce que le caisson de soufflage (58) comprend un caisson répartiteur d'air (61) et un grand nombre de petits tubes de soufflage (59) fichés dans une paroi antérieure (62) du caisson répartiteur d'air (61), et en ce qu'au moins les petits tubes de soufflage (59) disposés dans les zones périphériques du caisson de soufflage sont pourvus chacun d'une valve (63) par laquelle chacun de ces petits tubes de soufflage (59) peut être isolé de l'alimentation en air indépendamment des autres petits tubes de soufflage (59).

9. Dispositif suivant la revendication 8, caractérisé en ce que les valves (63) sont des valves pouvant être actionnées individuellement.

10. Dispositif suivant les revendications 8 et 9, caractérisé en ce que le caisson de soufflage (58) est inséré dans une chaine de fabrication commandée par programme et que le champ des petits tubes de soufflage (59) chaque fois alimenté au moyen d'air de soufflage peut être modifié par la commande centrale à programme.

**Patentansprüche**

1. Vorrichtung zum thermischen Vorspannen von Glasscheiben, mit zwei einander gegenüber angeordneten Blaskästen mit jeweils einer Vielzahl von Blasröhrchen oder Blasöffnungen, dadurch gekennzeichnet, daß im Fall von Blaskästen (1, 20, 41, 58), deren mit den Blasdüsen besetzten Feld zum Vorspannen von verhältnismäßig großen Glasscheiben eingerichtet ist, die Luftzufuhr zu bestimmten Blasröhrchen oder Blasöffnungen oder zu Gruppen von Blasröhrchen oder Blasöffnungen wenigstens in den Randzonen des Blasdüsenfeldes in Abhängigkeit von der Form und der Größe der vorzuspannenden Glasscheibe unterbrochen werden kann.

2. Vorrichtung nach Anspruch 1, dadurch gekennzeichnet, daß der Blaskasten (1) aus einem Luftverteilerkasten (2) und einer Vielzahl von in der Frontplatte (5) des Luftverteilerkastens (2) eingesetzten Düsenröhrchen (6) besteht, und daß unmittelbar vor der Frontplatte (5) ein mit Schienen (9) versehener und durch einen Spalt (8) in einer Seitenwand (7) des Verteilerkastens sich öffnender Führungsschlitz für die Aufnahme eines auswechselbaren Absperrschiebers (10) angeordnet ist, der eine der Form und Größe der vorzuspannenden Glasscheibe entsprechende Ausnehmung (12) aufweist.

3. Vorrichtung nach Anspruch 1, dadurch gekennzeichnet, daß der Blaskasten (20) einen Luftverteilerkasten (21) und eine Reihe von mit Abstand voneinander angeordneten und sich über die gesamte Breite des Luftverteilerkastens (21) erstreckenden Düsenstegen (18) umfaßt, und daß innerhalb der Düsenstege (18) Zwischenwände (30) vorgesehen sind, die Luftzuführungskanäle (31) begrenzen, wobei diese Kanäle sämtlich von einer Ebene ausgehen, vor der innerhalb des Luftverteilerkastens (21) ein Führungsschlitz (32) für einen von außen auswechselbaren Absperrschieber (35) vorgesehen ist, der eine der Form und Größe der vorzuspannenden Glasscheibe entsprechende Ausnehmung (36) aufweist.

4. Vorrichtung nach Anspruch 3, dadurch gekennzeichnet, daß der untere Blaskasten (20) einer horizontal ausgerichteten Vorspanneinrichtung unterhalb des Führungsschlitzes (32) mit einem weiteren Führungsschlitz (38) versehen ist, in den vor dem Auswechseln eines Absperrschiebers (35) ein Sammelblech (29) für eventuell in die nicht mit Luft beaufschlagten Düsenöffnungen (26) hineingefallene und auf dem Absperrschieber (35) liegende kleine Glassplitter einschiebbar ist.

5. Vorrichtung nach Anspruch 2, 3 oder 4, dadurch gekennzeichnet, daß der auswechselbare Absperrschieber (14) um die der Form der vorzuspannenden Glasscheibe entsprechende Ausnehmung (15) herum mit Bohrungen (16) oder anderen Einschnitten oder Aussparungen versehen ist, die eine verminderte Luftzufuhr zu den auf den Randbereich der Glasscheibe einwirkenden Blasröhrchen oder Blasöffnungen bewirken.

6. Vorrichtung nach Anspruch 1, dadurch gekennzeichnet, daß der Blaskasten (41) einen Luftverteilerkasten (43) und eine Reihe von mit Abstand voneinander angeordneten und sich über die gesamte Breite des Luftverteilerkastens (43) erstreckenden Düsenstegen (42) umfaßt, und daß die Düsenstege (42) in ihren seitlichen Endbereichen mit Öffnungen (50) versehen sind, in die Dichtstäbe (49) zum Absperren der Blasdüsen (47) von der Luftzufuhr von den Seiten her einschiebbar sind.

7. Vorrichtung nach Anspruch 6, dadurch gekennzeichnet, daß die Dichtstäbe (49) mit Dichtprofilleisten (53) aus einem verformbaren kautschukartigen Kunststoffmaterial versehen sind.

8. Vorrichtung nach Anspruch 1, dadurch gekennzeichnet, daß der Blaskasten (58) einen Luftverteilerkasten (61) und eine Vielzahl von in einer Vorderwand (62) des Luftverteilerkastens (61) eingesetzten Blasröhrchen (59) umfaßt, und daß wenigstens die in den Randbereichen des Blaskastens angeordneten Blasröhrchen (59) jeweils mit einem Ventil (63) versehen sind, durch das jedes dieser Blasröhrchen (59) unabhängig von den übrigen Blasröhrchen (59) von der Luftzufuhr abgesperrt werden kann.

9. Vorrichtung nach Anspruch 8, dadurch gekennzeichnet, daß die Ventile (63) individuell ansteuerbare Ventile sind.

10. Vorrichtung nach Anspruch 8 und 9, dadurch gekennzeichnet, daß der Blaskasten (58) in einer programmgesteuerten Fertigungslinie eingesetzt ist, und daß das jeweils mit der Blasluft beaufschlagte Feld der Blasröhrchen (59) durch die zentrale Programmsteuerung veränderbar ist.

**Claims**

1. Apparatus for the thermal annealing of glass sheets having two opposed blowing containers, each being provided with a large number of blowing perforations or orifices, characterized in that in the case of the blowing containers (1, 20, 41, 58), where the perforations are provided for the purpose of the annealing of relatively large glass sheets, the blowing air supply for certain perforations or orifices or groups of perforations or orifices can be interrupted at least in the peripheral zones of the blowing perforation field, as a function of the shape and size of the glass sheets to be annealed.

2. Apparatus according to claim 1, characterized in that the blowing container (1) is formed by an air distributing container (2) and a large number of tubular perforation (6) introduced into the front plate (5) of the distributing container (2) and that immediately upstream of the front plate (5) is provided a passage with slides (9) opening by a slot (8) into a side wall (7) of the distributing container, said passage serving to receive a replaceable stop gate (10) having a cutout (12) corresponding to the shape and size of the glass sheet to be annealed.

3. Apparatus according to claim 1, characterized in that the blowing container (20) comprises an air distributing container (21) and a series of spaced plate-like nozzles (18) extending over the entire width of the air distributing container (21) and in that within the plate-like nozzles (18) are provided partitions (30), which define air supply ducts (31), all of which start in a plane in front of which is provided, within the air distributing container (21), a passage (32) for receiving a stop gate (35), which can be replaced from the outside and which has a cutout (36) corresponding to the shape and size of the glass sheet to be annealed.

4. Apparatus according to claim 3, characterized in that the lower blowing container (20) of a horizontally oriented annealing device is provided, below passage (32) with another passage (38) in which, prior to the replacement of the stop gate (35), can be insert a collecting metal sheet (29) for collecting small glass splinters which may have dropped into the orifices (26) not supplied with air and located on the stop gate (35).

5. Apparatus according to one of the claims 2, 3 or 4, characterized in that the replaceable stop gate (14) is provided, all around the cutout (15) corresponding to the shape of the glass sheet to be annealed, with performations (16) or other incisions or slots ensuring a reduced air supply for the blowing orifices or perforations acting on the peripheral zone of the glass sheet.

6. Apparatus according to claim 1, characterized in that the blowing container (41) comprises an air distributing container (43) and a series of reciprocally spaced plate-like nozzles (42) extending over the entire width of the air distributing container (43) and in that nozzles (42) are provided in their lateral end with openings (50), into which can be laterally inserted sealing bars (49) for isolating the blowing orifices (47) from the air supply.

7. Apparatus according to claim 6, characterized in that the sealing bars (49) are provided with sealing mouldings (53) made from a deformable material of the rubber/elastomer type.

8. Apparatus according to claim 1, characterized in that the blowing container (58) comprises an air distributing container (61) and a large number of small blowing tubes (59) fitted into a front wall (62) of the air distributing container (61) and in that at least the small blowing tubes (59) disposed in the peripheral zones of the blowing container are in each case provided with a valve (63) by which each of said small blowing tubes (59) can be isolated from the air supply, independently of the other small blowing tubes (59)

9. Apparatus according to claim 8, characterized in that the valves (63) can be individually operated.

10. Apparatus according to claims 8 and 9, characterized in that the blowing container (58) is inserted into a program-controlled production line and that the field of the small blowing tubes (59), whenever supplied by the air supply means, can be modified by programmed central control.

Fig. 1

Fig. 2

Fig. 3

Fig. 4

*Fig. 5*

EP 0 246 123 B1

_Fig. 6_

EP 0 246 123 B1

Fig. 7

Fig. 8

Fig. 4